# EUROPEAN PATENT SPECIFICATION

(11) **EP 4 343 795 B1**
(45) Date of publication and mention of the grant of the patent: **10.12.2025**
(21) Application number: 23194314.3
(22) Date of filing: 30.08.2023
(51) Int. Cl.: H01F 27/06, H01F 27/26, H01F 27/28, H01F 27/30, H01F 27/32, H01F 37/00

(54) **CHOKE, FILTER CIRCUIT, ELECTRICAL DEVICE, CHARGING PILE, AND INVERTER**
DROSSEL, FILTERSCHALTUNG, ELEKTRISCHE VORRICHTUNG, LADESÄULE UND WECHSELRICHTER
BOBINE D'ARRÊT, CIRCUIT DE FILTRE, DISPOSITIF ÉLECTRIQUE, PILE DE CHARGE ET ONDULEUR

(30) Priority: 21.09.2022 CN 202222509972 U
(43) Date of publication of application: 27.03.2024
(73) Proprietor: Huawei Digital Power Technologies Co., Ltd., Shenzhen, Guangdong 518043 (CN)
(72) Inventor: LIU, Liang, Shenzhen, 518043 (CN); LIU, Lin, Shenzhen, 518043 (CN); XIONG, Jianhui, Shenzhen, 518043 (CN)
(74) Representative: Gill Jennings & Every LLP

(56) References cited:
- EP-A1- 3 336 861
- CN-A- 109 378 169
- CN-A- 110 739 120
- DE-U1- 202004 010 463
- TW-B- I 756 150
- US-A1- 2020 168 390
- US-A1- 2020 194 160
- US-A1- 2021 183 563
- US-A1- 2022 028 604
- US-A1- 2022 044 860

## Description

### TECHNICAL FIELD

This application relates to the field of electronic technologies, and in particular, to a choke, a filter circuit, an electrical device, a charging pile, and an inverter.

### BACKGROUND

At present, a charging pile with high power and high power density becomes a good solution to solve a problem of charging difficulty of new energy vehicles. However, a product with high power and high power density faces great challenges in electromagnetic compatibility. In addition to optimizing wiring and reducing interference of an interference source, an optimization design needs to be further performed on filter components such as a common mode choke.

To better implement requirements of high power and high power density of a charger module of a charging pile, manufacturers increasingly start to study a high-power common mode choke. An occupied area of a conventional common mode choke on a circuit board is large, resulting in low power density.

CN109378169A relates to a kind of electronic technology fields, more particularly, to a reactor. US20200194160A1 relates to a circuit assembly. US20210183563A1 relates to coil components and more specifically to a coil component, such as a common-mode choke coil, in which a holder holds a pair of coil conductors cylindrically wound and a frame-shaped magnetic core extending through the coil conductors. EP3336861A1 relates to an upright composite common mode coil assembly that facilitates automatic discharging on a production line, reduces the layout area of a circuit board, and facilitates stacking of a plurality of these assemblies. US20220044860A1 relates to magnetic devices having one or more coils of conductor wire wound on a magnetic core. TWI756150B relates to a common mode inductor, especially to a common mode inductor capable of shortening the conduction path of a circuit. US20220028604A1 relates to a method of manufacturing a common mode inductor or differential mode inductor.

### SUMMARY

The invention is defined by the appended claims. Embodiments not falling within the scope of the claims are for illustration only. Technical solutions of this application provide a choke as set forth in claim 1. Claims 9, 11, 13, and 14 are directed to a filter circuit, an electrical device, a charging pile, and an inverter, respectively, comprising the choke of the invention, so that an occupied area of the choke on a circuit board is small, which is conducive to improving power density. Dependent claims are directed to preferred implementations.

According to a first aspect, a technical solution of this application provides a choke according to claim 1, configured to be installed in a filter circuit, and the choke includes an insulation support, a magnetic core, and coils. The insulation support is fastened to a circuit board of the filter circuit. The magnetic core is of a closed ring structure, the magnetic core is provided with a through hole, and an axis of the through hole is parallel to the circuit board. The magnetic core is fastened to a side that is of the insulation support and that faces away from the circuit board. The coils pass through the through hole and are wrapped around a local part of the magnetic core, and parts of the coils are located between the local part and the insulation support. Pins of the coils pass through the insulation support and are electrically connected to the circuit board.

In this solution, the axis of the through hole of the magnetic core is parallel to the circuit board, so that the magnetic core is "upright" relative to the circuit board, and the coils pass through the through hole and are wrapped around the magnetic core. This design can reduce an orthographic projection area of the choke on the circuit board, which is conducive to reducing an occupied area of the choke on the circuit board. In addition, the coils are wrapped around only a local part that is of the magnetic core and that is located on a side of the through hole. In this wiring manner, an orthographic projection area of the coils on the circuit board is small, which is conducive to reducing an occupied area of an entire choke on the circuit board. Therefore, in this solution, the occupied area of the choke on the circuit board is small, which is conducive to improving power density.

In an implementation of the first aspect, the parts of the coils are in contact with the insulation support, and the coils are not in contact with the local part.

In this solution, the coils are not in contact with the insulation support, so that the insulation support can support the coils. In addition, the insulation support has a support function for the magnetic core. Therefore, the coils may be suspended relative to the insulation support, and there may be a gap between the coils and the insulation support. In this solution, the coils may not tighten the local part, so that stress of the local part of the magnetic core is small. Therefore, the magnetic core can be prevented from being cracked, which is conducive to ensuring reliability and a service life of the magnetic core. In addition, the gap between the coils and the insulation support is conducive to ensuring an electrical spacing between the coils and the insulation support. Therefore, the coils and the insulation support may not be isolated by using an insulation film (in a conventional solution, the coils and/or the insulation support may be covered with an insulation film), which is conducive to simplifying a design and reducing costs.

In an implementation of the first aspect, the insulation support includes a base plate and bosses disposed on the base plate. The base plate is fastened to the circuit board, and the bosses are located on a side that is of the base plate and that faces away from the circuit board. The magnetic core is fastened to the bosses. The parts of the coils are located between the local part and the base plate and are in contact with the base plate. Pins of the coils pass through the base plate.

In this solution, according to the insulation support of the foregoing structure, the magnetic core and the coils can be better supported, and reliable installation of the choke, reliability and a service life of the magnetic core, and an electrical spacing between the coils and the insulation support can be ensured.

As set forth in claim 1, there are at least two coils, and any two adjacent coils are distributed at spacings.

In this solution, there are two or more than two coils in the choke, and such a choke may be a two-phase choke or a three-phase choke, which can meet a product requirement.

In an implementation of the first aspect, the insulation support includes a spacer, and any two adjacent coils are separated by the spacer. As set forth in claim 1, in any two adjacent coils, an insulation tube is sleeved on an outer circumference of a turn that is of each coil and that is adjacent to another coil.

In an implementation of this solution, every two adjacent coils are separated by the spacer, so that an electrical distance between the coils can be ensured. According to the claimed invention, adjacent turns of two adjacent coils are separated by using the insulation tube, so that an electrical distance between the coils can be ensured.

In an implementation of the first aspect, the insulation support is located between the magnetic core and the circuit board. According to the design of this solution, the magnetic core, the insulation support, and the circuit board may be sequentially stacked, to be specific, all parts of the insulation support may be located between the magnetic core and the circuit board. The insulation support of this solution has a simple structure and good mass production.

In an implementation of the first aspect, an outer surface of the local part of the magnetic core includes a convex curved surface. In this solution, the local part has the convex curved surface, which is conducive to increasing a cross-sectional area of the local part wrapped by the coils, so that inductance is improved.

In an implementation of the first aspect, a wire shape of the coils includes a flat wire. In this solution, the flat wire has a thick diameter, and a large current can flow through the flat wire, so that the choke has a large through-current capability and large power. Due to use of the flat wire, the coils can be wrapped into a single layer. A single-layer wrapping design of the coils facilitates wrapping the coils by using a wrapping device (for example, an automatic wrapping machine), so that wrapping efficiency is improved. In addition, the single-layer wrapping design is also conducive to reducing distributed capacitance, so that the choke has good high-frequency filtering performance. The single-layer wrapping design further enables the coils to dissipate heat more easily.

In an implementation of the first aspect, the magnetic core is of an integrated structure. In this solution, all parts of the magnetic core are connected together, and are not cut or assembled. The integrated magnetic core is not cut, so that inductance is not easy to attenuate. Therefore, a volume required for the magnetic core may be small, and an occupied area on the circuit board may be small. In addition, the integrated magnetic core has high mechanical reliability, and costs can be reduced because assembly is not required.

According to a second aspect, a technical solution f this application provides a filter circuit, and the filter circuit includes a choke and a circuit board. The choke includes an insulation support, a magnetic core, and coils. The insulation support is fastened to the circuit board. The magnetic core is of a closed ring structure, the magnetic core is provided with a through hole, and an axis of the through hole is parallel to the circuit board. The magnetic core is fastened to a side that is of the insulation support and that faces away from the circuit board. The coils pass through the through hole and are wrapped around a local part of the magnetic core, and parts of the coils are located between the local part and the insulation support. Pins of the coils pass through the insulation support and are electrically connected to the circuit board.

In this solution, the axis of the through hole of the magnetic core is parallel to the circuit board, so that the magnetic core is "upright" relative to the circuit board, and the coils pass through the through hole and are wrapped around the magnetic core. This design can reduce an orthographic projection area of the choke on the circuit board, which is conducive to reducing an occupied area of the choke on the circuit board. In addition, the coils are wrapped around only a local part that is of the magnetic core and that is located on a side of the through hole. In this wiring manner, an orthographic projection area of the coils on the circuit board is small, which is conducive to reducing an occupied area of an entire choke on the circuit board. Therefore, in this solution, the occupied area of the choke on the circuit board is small, which is conducive to improving power density and performance of the filter circuit.

In an implementation of the second aspect, the insulation support is located between the magnetic core and the circuit board. According to the design of this solution, the magnetic core, the insulation support, and the circuit board may be sequentially stacked, to be specific, all parts of the insulation support may be located between the magnetic core and the circuit board. The insulation support of this solution has a simple structure and good mass production.

According to a third aspect, a technical solution f this application provides an electrical device, and the electrical device includes a filter circuit. The filter circuit includes a choke and a circuit board. The choke includes an insulation support, a magnetic core, and coils. The insulation support is fastened to the circuit board. The magnetic core is of a closed ring structure, the magnetic core is provided with a through hole, and an axis of the through hole is parallel to the circuit board. The magnetic core is fastened to a side that is of the insulation support and that faces away from the circuit board. The coils pass through the through hole and are wrapped around a local part of the magnetic core, and parts of the coils are located between the local part and the insulation support. Pins of the coils pass through the insulation support and are electrically connected to the circuit board.

In this solution, the axis of the through hole of the magnetic core is parallel to the circuit board, so that the magnetic core is "upright" relative to the circuit board, and the coils pass through the through hole and are wrapped around the magnetic core. This design can reduce an orthographic projection area of the choke on the circuit board, which is conducive to reducing an occupied area of the choke on the circuit board. In addition, the coils are wrapped around only a local part that is of the magnetic core and that is located on a side of the through hole. In this wiring manner, an orthographic projection area of the coils on the circuit board is small, which is conducive to reducing an occupied area of an entire choke on the circuit board. Therefore, in this solution, the occupied area of the choke on the circuit board is small, which is conducive to improving power density and performance of the electrical device.

In an implementation of the third aspect, the electrical device includes at least one of a charging pile, an inverter, a telecom power, and a rectifier. The design of this solution can be applied to devices such as the charging pile, the inverter, the telecom power, and the rectifier, which is conducive to improving power density and product performance.

In an implementation of the third aspect, the electrical device is the charging pile. The charging pile includes a charger module. The charger module includes the filter circuit. The design of this solution can be applied to the charger module of the charging pile, which is conducive to improving power density of the charging pile and product performance.

In an implementation of the third aspect, the electrical device is the inverter. The inverter includes a DC-AC conversion circuit. The DC-AC conversion circuit is connected to the filter circuit. A DC side of the DC-AC conversion circuit may be connected to the filter circuit, an AC side of the DC-AC conversion circuit may be connected to the filter circuit. The design of this solution can be applied to the inverter, which is conducive to improving power density of the inverter and product performance.

According to a fourth aspect, a technical solution f this application provides a charging pile, and the charging pile includes an AC distribution module, a charger module, a DC distribution module, and a charging connector. The AC distribution module is connected to a grid and an input end of the charger module, an output end of the charger module is connected to an input end of the DC distribution module, and an output end of the DC distribution module is connected to the charging connector. The charger module includes a filter circuit, and the filter circuit includes a choke and a circuit board. The choke includes an insulation support, a magnetic core, and coils. The insulation support is fastened to the circuit board. The magnetic core is of a closed ring structure, the magnetic core is provided with a through hole, and an axis of the through hole is parallel to the circuit board. The magnetic core is fastened to a side that is of the insulation support and that faces away from the circuit board. The coils pass through the through hole and are wrapped around a local part of the magnetic core, and parts of the coils are located between the local part and the insulation support. Pins of the coils pass through the insulation support and are electrically connected to the circuit board. The AC distribution module is configured to transmit AC energy of the grid to the charger module. The charger module is configured to convert the AC energy into DC energy, and transmit the DC energy to the DC distribution module. The DC distribution module is configured to output the DC energy to the charging connector. The charging connector is configured to be connected to a to-be-charged battery and charge the to-be-charged battery.

According to the charging pile of this solution, the filter circuit is applied to the charger module, which is conducive to improving power density of the charging pile and product performance.

According to a fifth aspect, a technical solution f this application provides an inverter, and the inverter includes a DC-AC conversion circuit and a filter circuit. The DC-AC conversion circuit is connected to a grid by using the filter circuit. The filter circuit includes a choke and a circuit board. The choke includes an insulation support, a magnetic core, and coils. The insulation support is fastened to the circuit board. The magnetic core is of a closed ring structure, the magnetic core is provided with a through hole, and an axis of the through hole is parallel to the circuit board. The magnetic core is fastened to a side that is of the insulation support and that faces away from the circuit board. The coils pass through the through hole and are wrapped around a local part of the magnetic core, and parts of the coils are located between the local part and the insulation support. Pins of the coils pass through the insulation support and are electrically connected to the circuit board.

According to the inverter of this application, the filter circuit is applied, which is conducive to improving power density of the inverter and product performance.

### BRIEF DESCRIPTION OF DRAWINGS

FIG. 1 is a schematic diagram of an assembly structure of a filter circuit according to an embodiment of this application;
FIG. 2 is a schematic diagram of an exploded structure of a filter circuit in FIG. 1;
FIG. 3 is a schematic diagram of an assembly structure of a choke in FIG. 2;
FIG. 4 is a schematic diagram of an exploded structure of a choke in FIG. 3;
FIG. 5 is a schematic diagram of a structure of a magnetic core in FIG. 4;
FIG. 6 is a schematic diagram of an assembly structure of a magnetic core and coils in FIG. 3;
FIG. 7 is an A-A sectional view of a structure shown in FIG. 6;
FIG. 8 is a schematic top view of a structure of a filter circuit in FIG. 1;
FIG. 9 is a schematic top view of a structure of a conventional filter circuit;
FIG. 10 is a schematic top view of a structure of a filter circuit according to another embodiment of this application;
FIG. 11 is a schematic top view of a structure of another conventional filter circuit;
FIG. 12 is a schematic diagram of a system architecture of a charging pile according to an embodiment of this application; and
FIG. 13 is a schematic diagram of a system architecture of an inverter according to an embodiment of this application.

### DESCRIPTION OF EMBODIMENTS

Embodiments of this application provide an electrical device including a filter circuit. The electrical device includes but is not limited to a charging pile, an inverter, a telecom power, a rectifier, and the like.

A charger module may be disposed in the charging pile. The charger module is configured to charge an electric vehicle (for example, a new energy vehicle or an electric motorcycle). The charger module may include the filter circuit.

The inverter may be used in a power supplying or power control scenario such as photovoltaic scenario or a frequency converter. The inverter may include a direct current-alternating current (DC-AC) conversion circuit and the filter circuit. The filter circuit may be connected to an AC side of the DC-AC conversion circuit, and the direct current-alternating current (DC-AC) conversion circuit may be connected to a grid (AC GRID) by using the filter circuit. The filter circuit may further be connected to a DC side of the DC-AC conversion circuit.

The telecom power may be used in a communication system, and the telecom power is configured to supply stable power to a load that is in the communication system, to ensure a safe and reliable operation of the communication system. The filter circuit may be disposed in the telecom power.

The rectifier may be a rectifier apparatus that converts an alternating current into a direct current, and the filter circuit may be disposed in the rectifier. For example, the rectifier may have the following functions: converting an alternating current into a direct current, supplying the direct current to a load after being filtered by the filter circuit, supplying a charging voltage to a storage battery, and the like.

The filter circuit in embodiments of this application may be configured to perform filtering, differential mode resonance suppression, common mode interference suppression, and the like. The filter circuit may include a circuit board, and components such as a choke and a capacitor that are disposed on the circuit board. The capacitor may be electrically connected to the choke. The choke may be a common mode choke configured to suppress common mode interference, or a differential mode choke configured to suppress differential mode resonance. The capacitor may be, for example, a Y capacitor that suppresses common mode interference, or an X capacitor that suppresses differential mode interference. At least one of the Y capacitor and the X capacitor may be disposed on the circuit board.

The following describes in detail a design of the choke in the filter circuit.

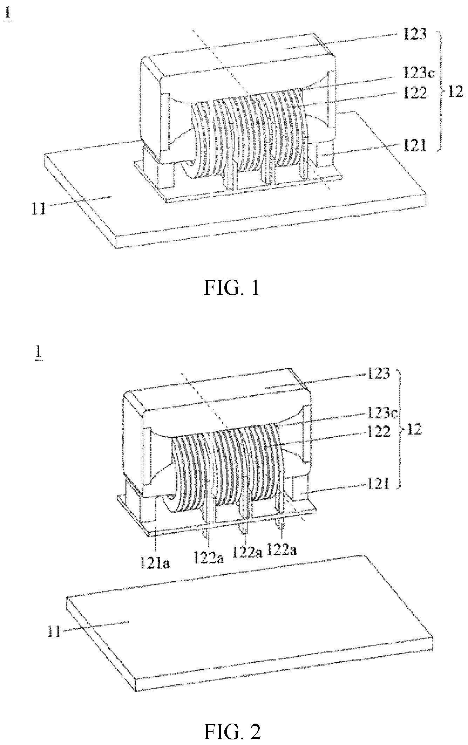

As shown in FIG. 1 and FIG. 2, a filter circuit 1 in an embodiment may include a circuit board 11 and a choke 12 installed on the circuit board 11. The choke 12 is electrically connected to the circuit board 11. For example, the choke 12 may be a common mode choke. It may be understood that this is merely an example. In another embodiment, the choke may alternatively be a differential mode choke. In addition, FIG. 1 and FIG. 2 are merely brief examples. Actually, another component, such as the foregoing Y capacitor and X capacitor, may be further disposed on the circuit board 11.

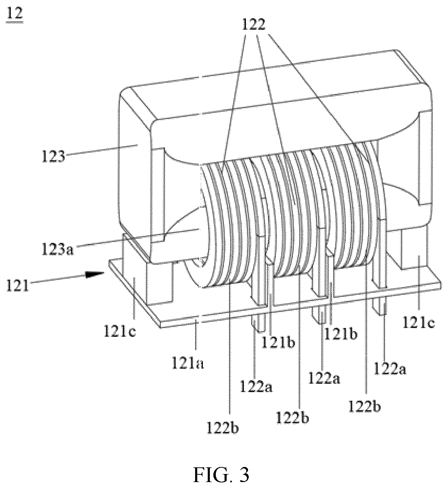

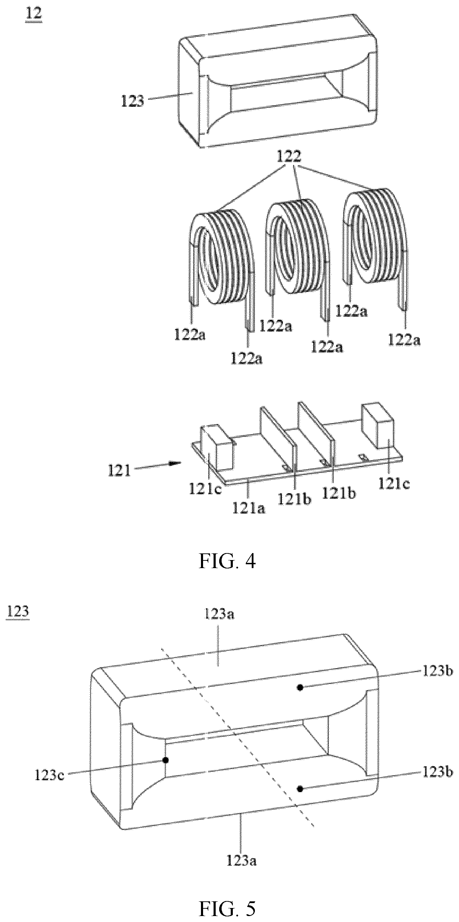

As shown in FIG. 3 and FIG. 4, the choke 12 includes an insulation support 121, a magnetic core 123, and coils 122. The magnetic core 123 is supported on the insulation support 121. The coils 122 are wrapped around the magnetic core 123, and may be supported by the insulation support 121. Details are described below.

With reference to FIG. 1 and FIG. 4, the magnetic core 123, the insulation support 121, and the circuit board 11 may be sequentially stacked. The insulation support 121 may be located between the magnetic core 123 and the circuit board 11. To be specific, all parts of the insulation support 121 may be located between the magnetic core 123 and the circuit board 11. Based on a perspective shown in FIG. 1, it may be considered that the entire insulation support 121 may be located below the magnetic core 123. In another embodiment, the foregoing limitation may not be imposed on a location of the insulation support relative to the magnetic core 123. For example, a part of the insulation support is located below the magnetic core 123, and another part is not located below the magnetic core 123.

As shown in FIG. 4, the insulation support 121 may include a base plate 121a, spacers 121b, and bosses 121c.

The base plate 121a may be basically in a flat plate shape, and a specific structure of the base plate 121a is not limited. The spacers 121b and the bosses 121c may be connected to a same side of the base plate 121a. Structures, locations, and quantities of the spacers 121b and the bosses 121c may be designed as required, which are not limited in this embodiment. For example, the bosses 121c may be approximately in block shapes. There may be two bosses 121c, and the two bosses 121c may be separately located on two opposite sides of the base plate 121a. For example, the spacers 121b may be approximately in plate shapes. There may be two spacers 121b, and the two spacers 121b may be located between the two bosses 121c.

In this embodiment, the insulation support 121 may be of an integrated structure, to be specific, the base plate 121a, the spacers 121b, and the bosses 121c may be connected with each other. Alternatively, the insulation support 121 may be of a split structure. For example, one of the bosses 121c and the spacers 121b may be assembled to the base plate 121a, and another of the bosses 121c and the spacers 121b may be connected to the base plate 121a; or the bosses 121c and the spacers 121b may be assembled to the base plate 121a.

In this embodiment, the insulation support 121 may support the magnetic core 123 and the coils 122. As shown in FIG. 3, the magnetic core 123 may be carried on the bosses 121c, and a gap may be formed between the magnetic core 123 and the base plate 121a. Parts 122b of the coils 122 may be located in the gap. The parts 122b that are of the coils 122 and that are located in the gap may be in contact with the base plate 121a, and the coils 122 may be carried on the base plate 121a. For example, the parts 122b may be bonded to the base plate 121a, so that the coils 122 are stably carried on the base plate 121a.

Different from the foregoing embodiment, in another embodiment, the insulation support 121 may not support the coils 122, to be specific, the parts 122b of the coils 122 may not be in contact with the base plate 121a (to be specific, there is a gap between the two), or the parts 122b are in contact with the base plate 121a but the base plate 121a basically does not support the parts 122b.

Refer to FIG. 3. The foregoing insulation support 121 matches a lower surface of the magnetic core 123, and does not match another surface of the magnetic core 123. Therefore, the insulation support 121 may have a simple structure, good mass production, and low costs.

In another embodiment, the structure of the insulation support may be designed as required, and is not limited to the foregoing description. For example, the insulation support may not have a spacer.

In this embodiment of this application, the insulation support may be made of an insulation material, for example, epoxy resin, plastic, and the like. For example, the foregoing base plate 121a and the foregoing spacers 121b may be made of epoxy resin.

As shown in FIG. 4 and FIG. 5, the magnetic core 123 is in a closed ring structure. For example, the magnetic core 123 in the figure may be approximately of a rectangular ring structure. In terms of appearance, the magnetic core 123 may be approximately of a cuboid structure. In another embodiment, the magnetic core may also be of a closed ring structure of another shape, for example, a closed circular structure. The magnetic core 123 encloses a through hole 123c, and the through hole 123c may be approximately a rectangular hole. The through hole 123c has an axis (indicated by a dashed line in the figure), and the axis may pass through a center of the through hole 123c, or may have a specific deviation from the center. With reference to FIG. 5 and FIG. 2, the axis is parallel to the circuit board 11, to be specific, the through hole 123c extends in a direction parallel to the circuit board 11. It may be understood that the foregoing "parallel" includes strict parallel in a geometric sense, and may further include a case in which a specific error exists relative to a case of strict parallel, to be specific, basic parallel with a specific error exists.

In this embodiment, the magnetic core 123 may be of an integrated structure, and all parts of the magnetic core 123 are connected as a whole without being cut and assembled. The integrated magnetic core 123 is not cut, so that inductance is not easy to attenuate. Therefore, a volume required for the magnetic core 123 may be small, and an occupied area on the circuit board 11 may be small. In addition, the integrated magnetic core 123 has high mechanical reliability, and costs can be reduced because assembly is not required.

As shown in FIG. 5, the magnetic core 123 may include two local parts 123a. For example, the two local parts 123a may be symmetrically distributed, and the local part 123a may be considered as a long column in the magnetic core 123. The local parts 123a are configured to be wrapped by the coils 122 (description will continue in the following).

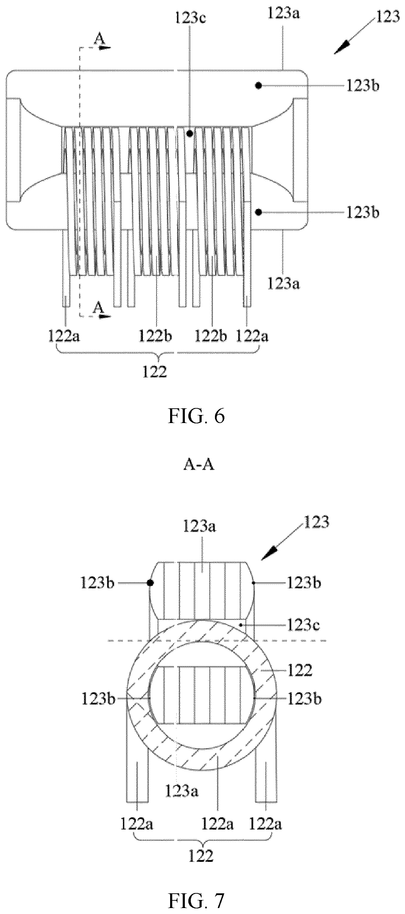

As shown in FIG. 5, outer surfaces of the local parts 123a may include curved surfaces 123b. For example, the curved surfaces 123b may be distributed at both ends of the axis of the through hole 123c (as shown in FIG. 7, description will continue in the following). Alternatively, the curved surfaces 123b may be located only at one end of the axis of the through hole 123c. Alternatively, the curved surfaces 123b may be located at another location of the local parts 123a, for example, inner walls of the through hole 123c may include the curved surfaces 123b. An area of the curved surface 123b may be determined according to an actual requirement, and is not limited in this embodiment.

In this embodiment, the curved surfaces 123b may be convex, to be specific, the curved surfaces 123b are in a bulged shape rather than a concave shape. For example, the curved surfaces 123b may be arc surfaces, to adapt to wrapping shapes of the coils 122.

In this embodiment, the convex curved surfaces 123b are conducive to increasing a cross-sectional area of the magnetic core 123, so that inductance is improved (description will continue in the following). In another embodiment, the outer surfaces of the local parts 123a may not include the convex curved surfaces 123b.

In this embodiment of this application, a material of the magnetic core 123 includes but is not limited to nanocrystalline, ferrite, and the like.

As shown in FIG. 4, there may be, for example, three coils 122, and a choke 12 having three coils 122 may be a three-phase common mode choke. In another embodiment, there may be one, two, or more coils 122. When there is one coil 122, the choke may be a differential mode choke. When there are two coils 122, the choke may be a two-phase common mode choke.

As shown in FIG. 4, in this embodiment, a wire type of the coils 122 may be a flat wire, and a cross section of this wire type may be of a flat rectangular structure. The flat wire has a thick diameter, and a large current can flow through the flat wire, so that the choke 12 has a large through-current capability and large power. The coils 122 may be wrapped into a single layer, to be specific, turns of the coils 122 are not stacked, but are sequentially distributed along an axis of the coils 122. The coils 122 can have a large through-current capability by using the flat wire. Therefore, even if the coils 122 are wrapped into the single layer, a through-current requirement of the coils 122 can be ensured. A single-layer wrapping design of the coils 122 facilitates wrapping the coils 122 by using a wrapping device (for example, an automatic wrapping machine), so that wrapping efficiency is improved. In addition, the single-layer wrapping design is also conducive to reducing distributed capacitance, so that the choke 12 has good high-frequency filtering performance.

As shown in FIG. 4, turns of the coils 122 may not need to be closely arranged, and there may be a specific gap between adjacent turns. In this design, air can be filled between adjacent turns of the coils 122, so that the coils 122 have better heat dissipation performance. In addition, compared with conventional multi-layer wrapping

(turns of coils are stacked, so that an inner layer and an outer layer can be distinguished), single-layer wrapping of the coils 122 enables the coils 122 to dissipate heat more easily.

In another embodiment, the coils may have another wire type, such as an enamelled copper wire. A cross section of the enamelled copper wire is round, and a diameter of the enamelled copper wire is thin. A wrapping manner of the coils may not be limited to the foregoing description. For example, the coils may be further wrapped into at least two layers, and turns of the coils may be further closely arranged and basically have no gap.

As shown in FIG. 4, two ends of the coils 122 are used as pins 122a, and the pins 122a may be welded to the circuit board 11, to implement through-current of the coils 122.

FIG. 6 and FIG. 7 show an assembly structure of coils 122 and a magnetic core 123. FIG. 7 is an A-A sectional view of FIG. 6. As shown in FIG. 6 and FIG. 7, the coils 122 may pass through a through hole 123c, and are wrapped around a local part 123a of the magnetic core 123. Pins 122a and parts 122b of the coils 122 may be located on a side that is of the local part 123a and that faces away from the through hole 123c. This wrapping manner of the coils 122 may be referred to as single-side wiring.

As shown in FIG. 7, two sides of the local part 123a may have convex curved surfaces 123b, and the curved surfaces 123b may adapt to shapes of the coils 122. In this embodiment, the convex curved surfaces 123b are designed, so that the curved surfaces 123b adapt to the shapes of the coils 122. Therefore, a space enclosed by the coils 122 can be effectively used, so that the local part 123a has a large cross-sectional area (compared with a rectangular cross-sectional area). The cross-sectional area of the local part 123a wrapped by the coils 122 is large. Therefore, inductance of a choke 12 is large.

As shown in FIG. 7, the coils 122 may not be in contact with the local part 123a of the magnetic core 123, and there may be a gap between the coils 122 and the local part 123a. In this design, the coils 122 may not tighten the local part 123a, so that stress of the local part 123a is small. Therefore, the magnetic core 123 can be prevented from being cracked, which is conducive to ensuring reliability and a service life of the magnetic core 123. For example, the coils 122 may not be in contact with all regions of the magnetic core 123, so that the reliability and the service life of the magnetic core 123 are ensured. In another embodiment, the coils 122 may be in contact with the magnetic core 123.

In this embodiment, the coils 122 and an insulation support 121 are assembled together, to facilitate implementing the foregoing design in which the coils 122 are not in contact with the local part 123a. Description is made in the following.

With reference to FIG. 6 and FIG. 3, parts 122b of the coils 122 may be in contact with a base plate 121a of the insulation support 121. The base plate 121a may support the parts 122b, so that the coils 122 may keep not being in contact with the local part 123a. In addition, with reference to FIG. 6 and FIG. 2, pins 122a of the coils 122 may pass through the base plate 121a and are welded to a circuit board 11. For example, the pins 122a may be bonded to the base plate 121a by using an adhesive, to enhance a support and fastening effect of the base plate 121a for the coils 122.

As shown in FIG. 3, adjacent coils 122 may be separated by a spacer 121b, to ensure an electrical distance between the coils 122.

In the claimed invention, in two adjacent coils 122, an insulation tube is sleeved on an outer circumference of a turn that is of each coil 122 and that is adjacent to another coil 122 (to be specific, the turn is accommodated in the insulation tube). Adjacent turns of the two adjacent coils 122 are separated by using the insulation tube, to ensure an electrical distance. In this embodiment, an adjacent turn is a turn that is in one coil 122 and that is closest to another coil 122. A wrapping length of the insulation tube may be designed as required, for example, a complete turn may be wrapped, or a part of a turn may be wrapped. The insulation tube may be a tubular part made of an insulation material (for example, plastic). In this embodiment, the design of the spacer 121b may not be used anymore, or the design of the insulation tube and the design of the spacer 121b may be used at the same time.

As shown in FIG. 1, in this embodiment, a wrapping manner of the coils 122 may be referred to as vertical wrapping, to be specific, an axis (shown by using a dashed line in FIG. 2) of the through hole 123c of the magnetic core 123 is parallel to the circuit board 11, the magnetic core 123 may be "upright" relative to the circuit board 11, and the coils 122 pass through the through hole 123c and are wrapped around the magnetic core 123. The vertical wrapping may enable the choke 12 to have a small occupied area on the circuit board 11. Description is made in the following.

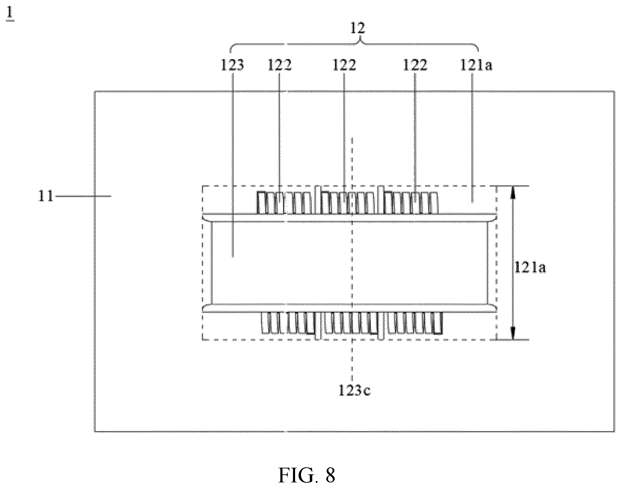

In this embodiment, the occupied area may be measured by using an orthographic projection area of the choke 12 on the circuit board 11. As shown in FIG. 8 (FIG. 8 is a top view of the structure shown in FIG. 1), an orthographic projection of the choke 12 on the circuit board 11 may be indicated by using a dashed box, and an area enclosed by the dashed box is the occupied area. An orthographic projection of the magnetic core 123 and an orthographic projection of the coils 122 may fall within an orthographic projection of the base plate 121a. Therefore, an orthographic projection area of the base plate 121a is the area enclosed by the dashed box.

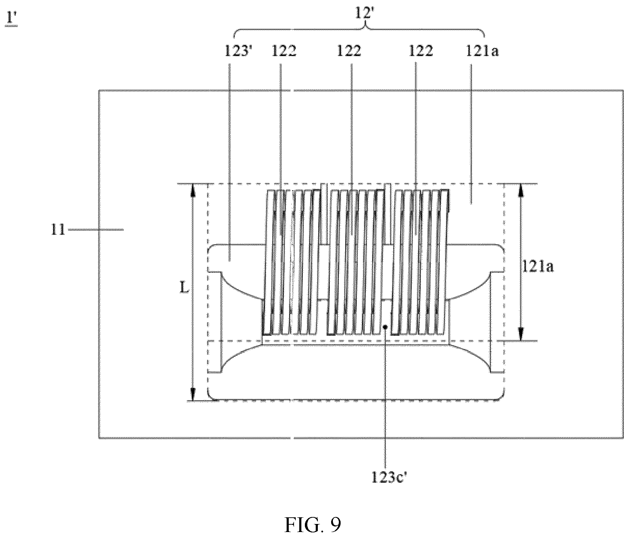

FIG. 9 shows a conventional solution that may be referred to as "horizontal wrapping". Same as FIG. 8, a filter circuit 1' shown in FIG. 9 includes a circuit board 11 and a choke 12'. The choke 12' may include an insulation support (FIG. 9 shows a base plate 121a, and a dashed line is used to indicate a boundary of the base plate 121a), a magnetic core 123', and coils 122. Structures, connection manners, and relative locations of the insulation support and the coils 122 may be the same as those in the embodiment shown in FIG. 8. Different from FIG. 8, in FIG. 9, an axis of a through hole 123c' of the magnetic core 123' is perpendicular to the circuit board 11, to be specific, the magnetic core 123' is "horizontal" relative to the circuit board 11. An orthographic projection of the choke 12' on the circuit board 11 may be indicated by a dashed box L, and an area enclosed by the dashed box L is an occupied area of the choke 12' on the circuit board 11. An orthographic projection of the coils 122 and an orthographic projection of a part of the magnetic core 123' may fall within an orthographic projection of the base plate 121a, and an orthographic projection of the other part of the magnetic core 123' may fall outside the orthographic projection of the base plate 121a. Therefore, an orthographic projection area of the base plate 121a + an orthographic projection area of the other part of the magnetic core 123' is the area enclosed by the dashed box L.

It is easy to understand by comparing FIG. 8 with FIG. 9 that, the area enclosed by the dashed box in FIG. 8 is smaller than the area enclosed by the dashed box L in FIG. 9. To be specific, an occupied area that is of a choke 12 using vertical wrapping and that is on the circuit board 11 is small, and an occupied area that is of a choke 12' using conventional horizontal wrapping and that is on the circuit board 11 is large.

In another conventional solution in which horizontal wrapping is used, different from FIG. 9, an area of the base plate may be increased, and the orthographic projections of the magnetic core and the coils on the circuit board fall within the orthographic projection of the base plate on the circuit board. In this case, the occupied area of the choke on the circuit board is equal to the orthographic projection area of the base plate on the circuit board. It is easy to understand that, the choke using the vertical wrapping has a small occupied area on the circuit board, while the conventional choke using the horizontal wrapping has a large occupied area on the circuit board.

In the foregoing description, an example in which both the orthographic projection of the magnetic core 123 and the orthographic projection of the coils 122 in FIG. 8 fall within the orthographic projection of the base plate 121a is used. Actually, this embodiment of this application is not limited thereto. For example, in an embodiment, an orthographic projection of a part of the magnetic core 123 may fall outside the orthographic projection of the base plate 121a. Compared with the conventional solution of horizontal wrapping, the occupied area of the choke in this embodiment on the circuit board 11 is still small. A specific principle is the same as that described above, which is not repeated herein.

In addition, the choke 12 in this embodiment may use a single-side wiring manner, to be specific, the coils 122 are wrapped around a part that is of the magnetic core 123 and that is located on a side (for example, a lower side in FIG. 1) of the through hole 123c. However, in another conventional solution in which horizontal wrapping is used, a dual-side wiring manner is used. To be specific, refer to FIG. 9, the coils 122 may be wrapped around a part that is of the magnetic core 123' and that is located on two sides (for example, an upper side and a lower side in FIG. 9) of the through hole 123c'. It is easy to understand that because the coils 122 on two sides need to occupy an area of the circuit board 11, an occupied area of a choke using the dual-side wiring on the circuit board 11 is larger. It can be learned from comparison that, the choke 12 in this embodiment uses the single-side wiring manner, so that an occupied area of the choke 12 on the circuit board 11 is small.

In conclusion, the choke 12 in this embodiment uses a design of vertical wrapping and single-side wiring, so that the occupied area of the choke 12 on the circuit board 11 is small. Therefore, more components may be arranged on the circuit board 11, which is conducive to improving power density.

The foregoing uses an example in which a shape of the magnetic core 123 is a cuboid to describe a design in which the occupied area of the choke 12 on the circuit board 11 is small. Actually, a structure of the magnetic core is not limited in this embodiment of this application. The following uses an example for description.

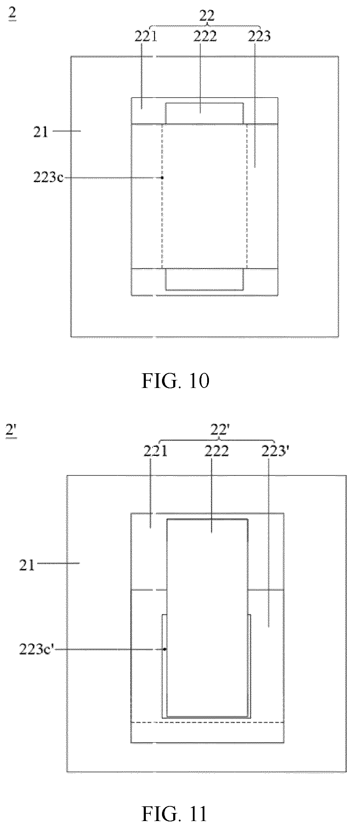

For example, in an embodiment shown in FIG. 10 (FIG. 10 uses a same top view angle as FIG. 8), a choke 22 in a filter circuit 2 uses vertical wrapping, a shape of a magnetic core 223 may be a cube, an axis of a through hole 223c of the magnetic core 223 may be parallel to a circuit board 21, and a coil 222 passes through the through hole 223c of the magnetic core 223 and is wrapped around a local part of the magnetic core 223. An occupied area of the choke 22 on the circuit board 21 is an orthographic projection area of the choke 22 on the circuit board 21, and is also an orthographic projection area of a base plate 221 on the circuit board 21.

Comparatively, FIG. 11 shows a conventional solution in which horizontal wrapping is used. Different from FIG. 10, a choke 22' in a filter circuit 2' in FIG. 11 uses horizontal wrapping, and a through hole 223c' of a magnetic core 223' is perpendicular to a circuit board 21. In FIG. 11, a part of the magnetic core 223' may extend outside a base plate 221 (a dashed horizontal line in FIG. 11 indicates a lower boundary of the base plate 221). An occupied area of the choke 22' on the circuit board 21 is an orthographic projection area of the choke 22' on the circuit board 21, and is also an orthographic projection area of the base plate 221 on the circuit board 21 + an orthographic projection area of the part of the magnetic core 223' located outside the base plate 221 on the circuit board 21.

It can be learned by comparing FIG. 10 and FIG. 11 that the orthographic projection area of the choke 22 shown in FIG. 10 on the circuit board 21 is small, and the orthographic projection area of the choke 22' shown in FIG. 11 on the circuit board 21 is large. Therefore, for the magnetic core 223 with a cube shape, the occupied area of the choke 22 on the circuit board 21 is small by using a vertical wrapping manner, but the occupied area of the choke 22' on the circuit board 21 is large by using a horizontal wrapping manner.

The foregoing describes in detail designs of the filter circuit and the choke in embodiments of this application. The following lists two types of electrical devices that apply the filter circuit.

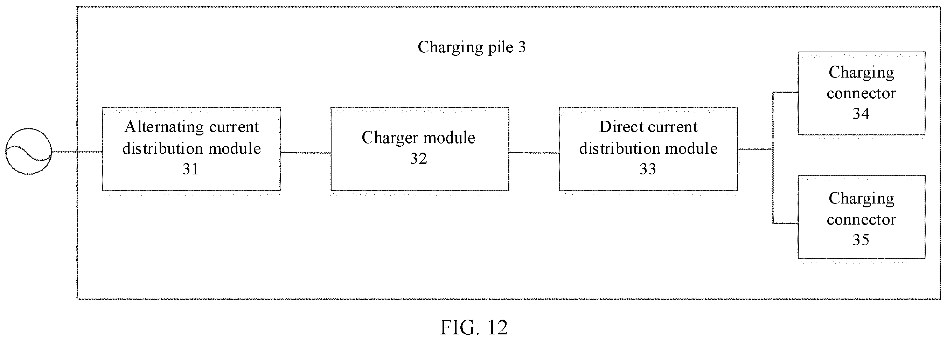

FIG. 12 shows system composition of a charging pile 3. As shown in FIG. 12, the charging pile 3 may include an AC distribution module 31, a charger module 32, a DC distribution module 33, a charging connector 34, a charging connector 35, and the like. The AC distribution module 31 is connected to a grid (as shown by a symbol on a left side in FIG. 12) and an input end of the charger module 32. An output end of the charger module 32 is connected to an input end of the DC distribution module 33. An output end of the DC distribution module 33 is connected to the charging connector 34 and the charging connector 35. For example, the charging pile 3 may include two charging connectors. In another embodiment, a quantity of charging connectors may be not limited. It may be understood that a system architecture of the charging pile 3 shown in FIG. 12 is an example. Actually, the charging pile 3 may further include another functional module.

Refer to FIG. 12. The AC distribution module 31 may be configured to process (for example, distribute) AC energy of the grid, and then transmit processed AC energy to the charger module 32. The charger module 32 may include an AC-DC conversion circuit, the foregoing filter circuit, and the like. The charger module 32 may be configured to convert AC energy into DC energy, and transmit the DC energy to the DC distribution module 33. The filter circuit is configured to perform filtering, differential mode resonance suppression, common mode interference suppression, and the like. The DC distribution module 33 may be configured to process (for example, distribute) DC energy, and output processed DC energy to the charging connector 34 and the charging connector 35. When charging is required, the charging connector 34 and the charging connector 35 may be connected to a to-be-charged battery, and perform DC charging on the to-be-charged battery.

The charging pile 3 in this embodiment may be, for example, a DC integrated charging pile. It may be understood that the charging pile 3 may alternatively be another type of charging pile, for example, a DC split charging pile.

The filter circuit in this embodiment of this application is applied to the charger module 32 of the charging pile 3, which is conducive to improving power density of the charging pile and product performance.

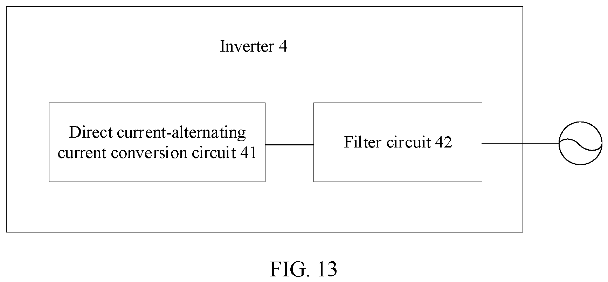

FIG. 13 shows system composition of an inverter 4. As shown in FIG. 13, the inverter 4 may include a DC-AC conversion circuit 41, a filter circuit 42, and the like. The filter circuit 42 may be connected to an AC side of the DC-AC conversion circuit 41, and the DC-AC conversion circuit 41 is connected to a grid (as shown by a symbol on a right side in FIG. 13) by using the filter circuit 42. The DC-AC conversion circuit 41 is configured to implement DC-AC conversion. The filter circuit 42 may be the foregoing filter circuit, and is configured to perform filtering, differential mode resonance suppression, common mode interference suppression, and the like. It may be understood that a system architecture of the inverter 4 shown in FIG. 13 is an example. Actually, the inverter 4 may further include another functional module.

The filter circuit in this embodiment of this application is applied to the inverter 4, which is conducive to improving power density of the inverter and product performance.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A choke (12), configured to be installed in a filter circuit (1), wherein
the choke (12) comprises an insulation support (121), a magnetic core (123), and coils (122);
the insulation support (121) is configured to be fastened to a circuit board (11) of the filter circuit (1);
the magnetic core (123) is of a closed ring structure, the magnetic core (123) is provided with a through hole, a through axis of the through hole is configured to be parallel to the circuit board (11) when the choke (12) is installed in the filter circuit (1), and the magnetic core (123) is fastened to a side that is of the insulation support (121) and that faces away from the circuit board (11); and
the coils (122) pass through the through hole and are wrapped around a local part of the magnetic core (123), parts of the coils (122) are located between the local part and the insulation support (121), and two ends of the respective coils (122) are used as pins passing through the insulation support (121) and configured to be electrically connected to the circuit board (11);
wherein there are at least two coils (122), and any two adjacent coils (122) are distributed at spacings; and
in any two adjacent coils (122), an insulation tube is sleeved on an outer circumference of a turn that is of each coil and that is adjacent to another coil such that adjacent turns of the two adjacent coils (122) are separated by using the insulation tube, to ensure an electrical distance.

2. The choke (12) according to claim 1, wherein
the parts of the coils (122) are in contact with the insulation support (121), and the coils (122) are not in contact with the local part.

3. The choke (12) according to claim 2, wherein
the insulation support (121) comprises a base plate (121a) and bosses (121c) disposed on the base plate (121a), the base plate (121a) is configured to be fastened to the circuit board (11), and the bosses (121c) are located on a side that is of the base plate (121a) and that faces away from the circuit board (11);
the magnetic core (123) is fastened to the bosses (121c); and
the parts of the coils (122) are located between the local part and the base plate (121a) and are in contact with the base plate (121a), and the pins of the coils (122) pass through the base plate (121a).

4. The choke (12) according to any preceding claim, wherein
the insulation support (121) comprises a spacer (121b), and any two adjacent coils (122) are separated by the spacer (121b).

5. The choke (12) according to any one of claims 1 to 4, wherein
the insulation support (121) is configured to be located between the magnetic core (123) and the circuit board (11).

6. The choke (12) according to any one of claims 1 to 5, wherein
an outer surface of the local part of the magnetic core (123) comprises a convex curved surface.

7. The choke (12) according to any one of claims 1 to 6, wherein
a wire shape of the coils (122) comprises a flat wire.

8. The choke (12) according to any one of claims 1 to 7, wherein
the magnetic core (123) is of an integrated structure.

9. A filter circuit (1), comprising:
the choke (12) according to any of claims 1 to 8, and a circuit board (11), wherein
the insulation support (121) is fastened to the circuit board (11); the through axis of the through hole is parallel to the circuit board (11); and the pins of the coils (122) pass through the insulation support (121) and are electrically connected to the circuit board (11).

10. The filter circuit (1) according to claim 9, wherein
the insulation support (121) is located between the magnetic core (123) and the circuit board (11).

11. An electrical device, comprising:
a filter circuit (1), wherein the filter circuit (1) comprises the choke (12) according to any of claims 1 to 8, and a circuit board (11); and
the insulation support (121) is fastened to the circuit board (11); the through axis of the through hole is parallel to the circuit board (11); and the pins of the coils (122) pass through the insulation support (121) and are electrically connected to the circuit board (11).

12. The electrical device according to claim 11, wherein
the electrical device comprises at least one of a charging pile, an inverter, a telecom power, and a rectifier.

13. A charging pile, comprising:
an AC distribution module, a charger module, a DC distribution module, and a charging connector, wherein the AC distribution module is connected to a grid and an input end of the charger module, an output end of the charger module is connected to an input end of the DC distribution module, and an output end of the DC distribution module is connected to the charging connector;
the charger module comprises a filter circuit (1), and the filter circuit (1) comprises the choke (12) according to any of claims 1 to 8, and a circuit board (11); the insulation support (121) is fastened to the circuit board (11); the through axis of the through hole is parallel to the circuit board (11); and the pins of the coils (122) pass through the insulation support (121) and are electrically connected to the circuit board (11);
the AC distribution module is configured to transmit AC energy of the grid to the charger module;
the charger module is configured to convert the AC energy into DC energy, and transmit the DC energy to the DC distribution module;
the DC distribution module is configured to output the DC energy to the charging connector; and
the charging connector is configured to be connected to a to-be-charged battery and charge the to-be-charged battery.

14. An inverter, comprising:
a DC-AC conversion circuit and a filter circuit (1), wherein the DC-AC conversion circuit is connected to a grid by using the filter circuit (1); and
the filter circuit (1) comprises the choke (12) according to any of claims 1 to 8, and a circuit board (11); the insulation support (121) is fastened to the circuit board (11); the through axis of the through hole is parallel to the circuit board (11); and the pins of the coils pass through the insulation support and are electrically connected to the circuit board.

## Patentansprüche

1. Drossel (12), die dazu konfiguriert ist, in einer Filterschaltung (1) installiert zu werden, wobei die Drossel (12) einen Isolationsträger (121), einen Magnetkern (123) und Spulen (122) umfasst;
der Isolationsträger (121) dazu konfiguriert ist, an einer Leiterplatte (11) der Filterschaltung (1) befestigt zu werden; der Magnetkern (123) eine geschlossene Ringstruktur hat, der Magnetkern (123) mit einem Durchgangsloch versehen ist, eine Durchgangsachse des Durchgangslochs dazu konfiguriert ist, parallel zu der Leiterplatte (11) zu liegen, wenn die Drossel (12) in der Filterschaltung (1) installiert ist, und der Magnetkern (123) an einer Seite befestigt ist, die von dem Isolationsträger (121) stammt und die von der Leiterplatte (11) abgewandt ist; und
die Spulen (122) durch das Durchgangsloch hindurch verlaufen und um einen lokalen Teil des Magnetkerns (123) gewickelt sind, sich Teile der Spulen (122) zwischen dem lokalen Teil und dem Isolationsträger (121) befinden, und zwei Enden der jeweiligen Spulen (122) als Stifte verwendet werden, die durch den Isolationsträger (121) hindurch verlaufen und dazu konfiguriert sind, elektrisch mit der Leiterplatte (11) verbunden zu sein; wobei mindestens zwei Spulen (122) vorliegen und zwei beliebige benachbarte Spulen (122) in Abständen verteilt sind; und
ein Isolierrohr bei zwei beliebigen benachbarten Spulen (122) derart auf den Außenumfang einer Windung, die von jeder Spule stammt und die an einer anderen Spule benachbart ist, aufgezogen ist, dass benachbarte Windungen der zwei benachbarten Spulen (122) unter Verwendung des Isolierrohres getrennt sind, um einen elektrischen Abstand sicherzustellen.

2. Drossel (12) nach Anspruch 1, wobei
die Teile der Spulen (122) in Kontakt mit dem Isolationsträger (121) stehen und die Spulen (122) nicht in Kontakt mit dem lokalen Teil stehen.

3. Drossel (12) nach Anspruch 2, wobei
der Isolationsträger (121) eine Grundplatte (121a) und auf der Grundplatte (121a) angeordnete Vorsprünge (121c) umfasst, die Grundplatte (121a) dazu konfiguriert ist, an der Leiterplatte (11) befestigt zu werden, und sich die Vorsprünge (121c) auf einer Seite befinden, die von Grundplatte (121a) stammt und der Leiterplatte (11) abgewandt ist;
der Magnetkern (123) an den Vorsprüngen (121c) befestigt ist; und
sich die Teile der Spulen (122) zwischen dem lokalen Teil und der Grundplatte (121a) befinden und mit der Grundplatte (121a) in Kontakt stehen, und die Stifte der Spulen (122) durch die Grundplatte (121a) hindurch verlaufen.

4. Drossel (12) nach einem der vorhergehenden Ansprüche, wobei der Isolationsträger (121) einen Abstandshalter (121b) umfasst, und zwei beliebige benachbarte Spulen (122) durch den Abstandshalter (121b) getrennt sind.

5. Drossel (12) nach einem der Ansprüche 1 bis 4, wobei der Isolationsträger (121) dazu konfiguriert ist, sich zwischen dem Magnetkern (123) und der Leiterplatte (11) zu befinden.

6. Drossel (12) nach einem der Ansprüche 1 bis 5, wobei eine Außenfläche des lokalen Teils des Magnetkerns (123) eine konvex gekrümmte Oberfläche umfasst.

7. Drossel (12) nach einem der Ansprüche 1 bis 6, wobei eine Drahtform der Spulen (122) einen Flachdraht umfasst.

8. Drossel (12) nach einem der Ansprüche 1 bis 7, wobei der Magnetkern (123) eine integrierte Struktur hat.

9. Filterschaltung (1), umfassend:
die Drossel (12) nach einem der Ansprüche 1 bis 8 und eine Leiterplatte (11), wobei
der Isolationsträger (121) an der Leiterplatte (11) befestigt ist; die Durchgangsachse des Durchgangslochs parallel zu der Leiterplatte (11) liegt; und die Stifte der Spulen (122) durch den Isolationsträger (121) hindurch verlaufen und elektrisch mit der Leiterplatte (11) verbunden sind.

10. Filterschaltung (1) nach Anspruch 9, wobei
sich der Isolationsträger (121) zwischen dem Magnetkern (123) und der Leiterplatte (11) befindet.

11. Elektrische Vorrichtung, umfassend:
eine Filterschaltung (1), wobei die Filterschaltung (1) die Drossel (12) nach einem der Ansprüche 1 bis 8 und eine Leiterplatte (11) umfasst; und
der Isolationsträger (121) an der Leiterplatte (11) befestigt ist; die Durchgangsachse des Durchgangslochs parallel zu der Leiterplatte (11) liegt; und die Stifte der Spulen (122) durch den Isolationsträger (121) hindurch verlaufen und elektrisch mit der Leiterplatte (11) verbunden sind.

12. Elektrische Vorrichtung nach Anspruch 11, wobei
die elektrische Vorrichtung mindestens eine Ladesäule, einen Wechselrichter, eine Telekommunikationsleistung und einen Gleichrichter umfasst.

13. Ladesäule, umfassend:
ein AC-Verteilungsmodul, ein Ladegerätemodul, ein DC-Verteilungsmodul und einen Ladeanschluss, wobei das AC-Verteilungsmodul mit einem Netz und einem Eingangsende des Ladegerätemoduls verbunden ist, ein Ausgangsende des Ladegerätemoduls mit einem Eingangsende des DC-Verteilungsmoduls verbunden ist und ein Ausgangsende des DC-Verteilungsmoduls mit dem Ladeanschluss verbunden ist;
das Ladegerätemodul eine Filterschaltung (1) umfasst, und die Filterschaltung (1) die Drossel (12) nach einem der Ansprüche 1 bis 8 und eine Leiterplatte (11) umfasst; der Isolationsträger (121) an der Leiterplatte (11) befestigt ist; die Durchgangsachse des Durchgangslochs parallel zu der Leiterplatte (11) liegt; und die Stifte der Spulen (122) durch den Isolationsträger (121) hindurch verlaufen und elektrisch mit der Leiterplatte (11) verbunden sind;
das AC-Verteilungsmodul dazu konfiguriert ist, AC-Energie des Netzes an das Ladegerätemodul zu übertragen;
das Ladegerätemodul dazu konfiguriert ist, die AC-Energie in DC-Energie umzuwandeln und die DC-Energie an das DC-Verteilungsmodul zu übertragen;
das DC-Verteilungsmodul dazu konfiguriert ist, die DC-Energie an den Ladeanschluss auszugeben; und
der Ladeanschluss dazu konfiguriert ist, mit einer zu ladenden Batterie verbunden zu werden und die zu ladende Batterie zu laden.

14. Wechselrichter, umfassend:
eine DC-AC-Umwandlungsschaltung und eine Filterschaltung (1), wobei die DC-AC-Umwandlungsschaltung unter Verwendung der Filterschaltung (1) mit einem Netz verbunden ist; und
die Filterschaltung (1) die Drossel (12) nach einem der Ansprüche 1 bis 8 und eine Leiterplatte (11) umfasst; der Isolationsträger (121) an der Leiterplatte (11) befestigt ist;
die Durchgangsachse des Durchgangslochs parallel zu der Leiterplatte (11) liegt; und die Stifte der Spulen durch den Isolationsträger hindurch verlaufen und elektrisch mit der Leiterplatte verbunden sind.

## Revendications

1. Bobine d'arrêt (12), configurée pour être installée dans un circuit de filtre (1), dans laquelle
la bobine d'arrêt (12) comprend un support isolant (121), un noyau magnétique (123), et des bobines (122) ;
le support d'isolation (121) est configuré pour être fixé à une carte de circuit imprimé (11) du circuit de filtrage (1) ;
le noyau magnétique (123) est d'une structure annulaire fermée, le noyau magnétique (123) est pourvu d'un trou traversant, un axe traversant du trou traversant est configuré pour être parallèle à la carte de circuit imprimé (11) lorsque la bobine d'arrêt (12) est installée dans le circuit de filtre (1), et le noyau magnétique (123) est fixé à un côté qui est du support d'isolation (121) et qui est tourné à l'opposé de la carte de circuit imprimé (11) ; et
les bobines (122) passent à travers le trou traversant et sont enroulées autour d'une partie locale du noyau magnétique (123), des parties des bobines (122) sont situées entre la partie locale et le support d'isolation (121), et deux extrémités des bobines respectives (122) sont utilisées comme broches traversant le support d'isolation (121) et configurées pour être connectées électriquement à la carte de circuit imprimé (11) ;
dans laquelle il existe au moins deux bobines (122), et deux bobines (122) adjacentes quelconques sont réparties à des espacements ; et
dans deux bobines (122) adjacentes quelconques, un tube isolant est manchonné sur une circonférence extérieure d'un tour qui est de chaque bobine et qui est adjacent à une autre bobine de telle sorte que les tours adjacents des deux bobines (122) adjacentes sont séparés à l'aide du tube isolant, pour assurer une distance électrique.

2. Bobine d'arrêt (12) selon la revendication 1, dans laquelle les parties des bobines (122) sont en contact avec le support isolant (121), et les bobines (122) ne sont pas en contact avec la partie locale.

3. Bobine d'arrêt (12) selon la revendication 2, dans laquelle le support d'isolation (121) comprend une plaque de base (121a) et des bossages (121c) disposés sur la plaque de base (121a), la plaque de base (121a) est configurée pour être fixée à la carte de circuit imprimé (11), et les bossages (121c) sont situés sur un côté qui est de la plaque de base (121a) et qui est tourné à l'opposé de la carte de circuit imprimé (11) ;
le noyau magnétique (123) est fixé aux bossages (121c) ; et
les parties des bobines (122) sont situées entre la partie locale et la plaque de base (121a) et sont en contact avec la plaque de base (121a), et les broches des bobines (122) traversent la plaque de base (121a).

4. Bobine d'arrêt (12) selon une quelconque revendication précédente, dans laquelle
le support d'isolation (121) comprend une entretoise (121b), et deux bobines (122) adjacentes quelconques sont séparées par l'entretoise (121b).

5. Bobine d'arrêt (12) selon l'une quelconque des revendications 1 à 4, dans laquelle
le support d'isolation (121) est configuré pour être situé entre le noyau magnétique (123) et la carte de circuit imprimé (11).

6. Bobine d'arrêt (12) selon l'une quelconque des revendications 1 à 5, dans laquelle
une surface extérieure de la partie locale du noyau magnétique (123) comprend une surface incurvée convexe.

7. Bobine d'arrêt (12) selon l'une quelconque des revendications 1 à 6, dans laquelle
une forme de fil des bobines (122) comprend un fil plat.

8. Bobine d'arrêt (12) selon l'une quelconque des revendications 1 à 7, dans laquelle
le noyau magnétique (123) est d'une structure intégrée.

9. Circuit de filtre (1), comprenant :
la bobine d'arrêt (12) selon l'une quelconque des revendications 1 à 8, et une carte de circuit imprimé (11), dans lequel le support d'isolation (121) est fixé à la carte de circuit imprimé (11) ; l'axe traversant du trou traversant est parallèle à la carte de circuit imprimé (11) ; et les broches des bobines (122) traversent le support d'isolation (121) et sont connectées électriquement à la carte de circuit imprimé (11).

10. Circuit de filtre (1) selon la revendication 9, dans lequel le support d'isolation (121) est situé entre le noyau magnétique (123) et la carte de circuit imprimé (11).

11. Dispositif électrique, comprenant :
un circuit de filtre (1), dans lequel le circuit de filtre (1) comprend la bobine d'arrêt (12) selon l'une quelconque des revendications 1 à 8, et une carte de circuit imprimé (11) ; et
le support d'isolation (121) est fixé à la carte de circuit imprimé (11) ; l'axe traversant du trou traversant est parallèle à la carte de circuit imprimé (11) ; et les broches des bobines (122) traversent le support d'isolation (121) et sont connectées électriquement à la carte de circuit imprimé (11).

12. Dispositif électrique selon la revendication 11, dans lequel le dispositif électrique comprend au moins l'un d'une pile de charge, d'un onduleur, d'une alimentation de télécommunication, et d'un redresseur.

13. Pile de charge, comprenant :
un module de distribution CA, un module de chargeur, un module de distribution CC, et un connecteur de charge, dans laquelle le module de distribution CA est connecté à un réseau et à une extrémité d'entrée du module de chargeur, une extrémité de sortie du module de chargeur est connectée à une extrémité d'entrée du module de distribution CC, et une extrémité de sortie du module de distribution CC est connectée au connecteur de charge ;
le module de chargeur comprend un circuit de filtre (1), et le circuit de filtre (1) comprend la bobine d'arrêt (12) selon l'une quelconque des revendications 1 à 8, et une carte de circuit imprimé (11) ; le support d'isolation (121) est fixé à la carte de circuit imprimé (11) ; l'axe traversant du trou traversant est parallèle à la carte de circuit imprimé (11) ; et
les broches des bobines (122) traversent le support d'isolation (121) et sont connectées électriquement à la carte de circuit imprimé (11) ;
le module de distribution CA est configuré pour transmettre l'énergie CA du réseau au module de chargeur ;
le module de chargeur est configuré pour convertir l'énergie CA en énergie CC, et transmettre l'énergie CC au module de distribution CC ;
le module de distribution CC est configuré pour délivrer l'énergie CC au connecteur de charge ; et
le connecteur de charge est configuré pour être connecté à une batterie à charger et charger la batterie à charger.

14. Onduleur, comprenant :
un circuit de conversion CC-CA et un circuit de filtre (1), dans lequel le circuit de conversion CC-CA est connecté à un réseau à l'aide du circuit de filtre (1) ; et
le circuit de filtre (1) comprend la bobine d'arrêt (12) selon l'une quelconque des revendications 1 à 8, et une carte de circuit imprimé (11) ; le support d'isolation (121) est fixé à la carte de circuit imprimé (11) ; l'axe traversant du trou traversant est parallèle à la carte de circuit imprimé (11) ; et
les broches des bobines traversent le support d'isolation et sont connectées électriquement à la carte de circuit imprimé.
